(19) **Europäisches Patentamt / European Patent Office / Office européen des brevets**

(11) **EP 2 450 681 B1**

(12) **FASCICULE DE BREVET EUROPEEN**

(45) Date de publication et mention
de la délivrance du brevet:
**17.10.2012   Bulletin 2012/42**

(51) Int Cl.:
***G01J 5/20*** *(2006.01)*

(21) Numéro de dépôt: **11306252.5**

(22) Date de dépôt: **29.09.2011**

(54) **Détecteur infrarouge a base de micro-planches bolométriques suspendues**

Infrarotdetektor auf der Basis von hängenden bolometrischen Mikroplatten

Infrared detector using suspended bolometric microplates

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.11.2010   FR 1059026**

(43) Date de publication de la demande:
**09.05.2012   Bulletin 2012/19**

(73) Titulaire: **Commissariat à l'Énergie Atomique et aux Énergies Alternatives**
**75015 Paris (FR)**

(72) Inventeurs:
- **Boutami, Salim**
  **38100 Grenoble (FR)**
- **Arnaud, Agnès**
  **38420 ST JEAN LE VIEUX (FR)**
- **Dumont, Geoffroy**
  **75011 Paris (FR)**
- **Imperinetti, Pierre**
  **38180 Seyssins (FR)**
- **Mary, Alexandre**
  **86100 Chatellerault (FR)**
- **Pocas, Stéphane**
  **38000 Grenoble (FR)**
- **Rabaud, Wilfried**
  **38430 Moirans (FR)**

(74) Mandataire: **Vuillermoz, Bruno et al**
**Cabinet Laurent & Charras**
**"Le Contemporain"**
**50, Chemin de la Bruyère**
**69574 Dardilly Cédex (FR)**

(56) Documents cités:
**WO-A2-2008/018082     US-A1- 2008 185 521**

**Description**

**DOMAINE DE L'INVENTION**

L'invention a trait au domaine de la détection bolométrique infrarouge, et plus particulièrement au domaine de la détection bolométrique à l'aide d'une matrice de micro-planches suspendues au dessus d'un substrat.

**ETAT DE LA TECHNIQUE**

Comme il est communément admis, la détection infrarouge, c'est-à-dire dans une gamme de longueurs d'onde comprises entre 0,75 $\mu$m et 1000 $\mu$m, est un domaine technologique soumis à des problématiques particulières. En effet, tout objet émet dans le spectre infrarouge dès lors que sa température est supérieure à 0°K. Ainsi, lorsqu'un détecteur infrarouge est non refroidi, les organes entourant les éléments sensibles (substrats, connectiques, boitiers, optiques, etc...) émettent un rayonnement infrarouge important venant s'ajouter au rayonnement issu de la scène que l'on cherche à détecter. Cette composante non utile peut être très importante et parfois constituer plus de 99% du signal total produit par les éléments de détection à une température de 300°K. Cette composante non utile est communément désignée sous l'expression de « bruit thermique » ou de « mode commun ».

Par conséquent, et contrairement à d'autres types de détection, et notamment la détection visible, il est nécessaire de prévoir des architectures et des fonctionnements sachant gérer de manière efficace ce mode commun. A cet effet, les premiers détecteurs infrarouges à haute sensibilité étaient refroidis à des températures très basses de l'ordre de la centaine de degrés Kelvin, voire même quelques degrés Kelvin, afin de minimiser le mode commun.

Par ailleurs, il existe deux classes distinctes de détecteurs infrarouge, à savoir les détecteurs dit « quantiques » et les détecteurs dit « thermiques », notamment les détecteurs thermiques bolométriques. Comme cela est également bien connu, les principes physiques mis en oeuvre par ces deux types de détection sont fondamentalement différents et induisent leur propre problématique.

Dans le cas des détecteurs quantiques, un semi-conducteur est utilisé pour produire des paires électron-trou sous l'effet de l'absorption de photons dans le spectre infrarouge, les porteurs de charges ainsi créés étant collectés via des électrodes, le plus souvent combinées à une jonction de type PN.

Au contraire, dans le cas des détecteurs bolométriques, on met en oeuvre un matériau absorbant choisi pour sa capacité à convertir la puissance du flux infrarouge incident en chaleur. Ce matériau, ou un second matériau en contact avec le premier matériau, est également utilisé pour convertir la chaleur produite en une variation d'une caractéristique électrique, généralement une variation de résistance électrique. La variation de la caractéristique électrique est ensuite mesurée.

Dans le but de gérer le mode commun, il a été conçu une architecture particulière de détecteur bolométrique, à savoir un détecteur qui comporte une matrice de micro-planches bolométriques suspendue au dessus d'un substrat dit « de lecture » à l'aide de bras de soutien et d'isolation thermique.

Comme cela est connu en soi, cette architecture est spécifiquement prévue pour isoler thermiquement les éléments bolométriques du substrat, qui est la principale source du mode commun en raison de sa localisation très proche. Ce faisant, on obtient d'une part un gain important en termes de sensibilité, et d'autre part cette architecture permet également de s'affranchir d'un refroidissement à très basse température.

Une telle architecture a fait l'objet de nombreuses études concernant la sensibilité des micro-planches bolométriques. Notamment, l'épaisseur des micro-planches étant réduite, ces dernières laissent passer une partie non négligeable du rayonnement à détecter. Afin d'augmenter la sensibilité des micro-planches, il est usuellement prévu sous chacune d'entre elles un réflecteur métallique qui permet un double passage du rayonnement dans les micro-planches. En outre, la distance entre une micro-planche et son réflecteur métallique associé a également été optimisée. Notamment, ces éléments sont séparés par de l'air ou du vide par une distance de $\lambda/4$, où $\lambda$, est une longueur d'onde à détecter, afin de réaliser une lame quart d'onde et donc obtenir un phénomène de résonnance. Une telle structure est par exemple décrite dans le document FR 2 752 299.

Si une architecture à base de micro-planches suspendues présente de nombreux avantages, et tout particulièrement la possibilité d'être utilisée sans refroidissement à de très basses températures, la présence des bras de soutien des micro-planches bolométriques ne permet pas d'obtenir un facteur de remplissage satisfaisant à l'aide des techniques courantes de fabrication.

Par exemple, la réalisation de détecteurs avec des micro-planches carrées de 12 $\mu$m de côté et absorbant autour de $\lambda$ = 10 $\mu$m nécessite pour chaque micro-planche une surface de substrat carrée d'au moins 25 $\mu$m de côté. La surface utile d'une matrice de micro-planches, dédiée à la détection, représente donc au plus 25% de la surface totale de la matrice.

Les documents WO 2008/018082 et US 2008/185521 divulguent des détecteurs bolométriques comprenant des structures de couplage de plasmons.

**EXPOSE DE L'INVENTION**

Le but de la présente invention est de résoudre le problème susmentionné de surface utile réduite dans des détecteurs bolométriques à base de micro-planches suspendues, en proposant une architecture qui augmente virtuellement cette surface utile sans que le ratio entre la surface des micro-planches et la surface totale de la matrice ne soit modifié.

A cet effet, l'invention a pour objet un détecteur bolométrique matriciel pour la détection d'un rayonnement électromagnétique dans une gamme prédéterminée de longueurs d'onde infrarouges, comportant :

■ un substrat ;
■ une matrice de micro-planches bolométriques pour la détection dudit rayonnement, suspendues au dessus du substrat à l'aide de bras de soutien ; et
■ des réflecteurs métalliques, formés sur le substrat et sous les micro-planches, pour la réflexion de la portion dudit rayonnement ayant traversé lesdites micro-planches sans être absorbée par celle-ci,

caractérisé en ce que pour chaque micro-planche :

■ le réflecteur comporte une partie positionnée au droit d'une micro-planche prolongée par une partie non positionnée sous la micro-planche ; et
■ au moins la partie du réflecteur non positionnée sous la micro-planche présente une texturation de surface selon un motif périodique propre à coupler une portion dudit rayonnement incident sur ladite partie à une onde guidée se propageant en direction de la partie du réflecteur positionnée sous la micro-planche.

En d'autres termes, une portion de la surface du substrat non positionnée sous les micro-planches est pourvue d'un motif périodique qui guide le rayonnement qu'elle reçoit sous les micro-planches par un phénomène d'excitation de mode plasmon de surface. La portion du réflecteur positionnée sous les micro-planches renvoie alors cette partie du rayonnement vers les micro-planches elles-mêmes, en plus de réfléchir le rayonnement ayant traversé celles-ci. Ainsi donc, une partie du substrat non positionné sous les micro-planches est utilisée pour la détection, ce qui augmente la surface utile de détection sans que les dimensions des micro-planches ne soient augmentées.

Dans ce qui suit, et comme il est usuellement admis dans le domaine, le terme pixel, lorsqu'il se réfère à la matrice de détection, se comprend comme l'ensemble des éléments matériels produisant un signal de sortie relatif à un point d'image, ainsi qu'à la surface dédiée à ces éléments.

Selon un mode de réalisation, la texturation est réalisée sur une épaisseur de métal au moins supérieure à l'épaisseur de peau du métal constitutif de la couche métallique pour la gamme de longueurs d'onde. De cette manière, le réflecteur reste opaque au rayonnement. Par exemple, si la texturation est réalisée par gravure d'une couche métallique, la gravure n'est pas débouchante et s'arrête sur une épaisseur de métal supérieure à l'épaisseur de peau.

Selon un mode de réalisation, la texturation comporte des fentes définissant des contours fermés concentriques, notamment des cercles ou des carrés concentriques. De cette manière, la détection par la texturation est insensible à la polarisation du rayonnement incident.

En variante, la texturation comporte des fentes périodiques parallèles selon une seule direction, de sorte que la détection par la texturation est sensible à une seule polarisation.

Selon un mode de réalisation de l'invention, les réflecteurs sont formés dans une couche métallique recouvrant le substrat au moins sous toute la surface de la matrice de micro-planches, et les réflecteurs sont individualisés au moyen de zones de la couche métallique définissant une rupture de la périodicité de la texturation des réflecteurs.

Une telle rupture permet ainsi d'individualiser les réflecteurs et d'éviter les phénomènes de « crosstalk » entre pixels voisins, c'est-à-dire la détection par un pixel d'un rayonnement qui devrait normalement être détecté par un pixel adjacent. Une bonne délimitation des pixels est ainsi obtenue.

En outre, le procédé de fabrication des réflecteurs est simple puisque ceux-ci peuvent être réalisés simplement par la mise en oeuvre d'un dépôt pleine plaque d'une couche métallique sur le substrat suivi d'une étape de lithogravure avec un seul masque pour réaliser les réflecteurs individuels.

Selon un mode de réalisation, la période $P$ du motif périodique de la texturation est inférieure ou égale à $\dfrac{\lambda}{n}$, où $\lambda$ est une longueur d'onde de la gamme de longueurs d'onde à détecter et $n$ est l'indice de réfraction du milieu séparant la micro-planche du réflecteur. Préférentiellement, ladite période du motif est sensiblement égale à $\dfrac{\lambda}{3 \times n}$.

Selon un mode de réalisation, la profondeur h de la texturation est inférieure ou égale à $\dfrac{\lambda}{5 \times n}$, et préférentiellement sensiblement égale à $\dfrac{\lambda}{10 \times n}$. De cette manière, l'absorbation du rayonnement pas la texturation est réduite. Notamment, lorsque la texturation est formée de fentes, une telle épaisseur empêche que le rayonnement ne soit piégé dans celles-ci, et donc absorbé.

De manière avantageuse, la partie en creux de la texturation représente moins de 50% de la surface totale de la texturation. Notamment, la texturation est constituées de fentes périodiques dont la largeur $e$ est choisie telle que $0,05 < \dfrac{e}{P} < 0,5$, où *P* est la période du motif de la texturation. On favorise ainsi l'excitation d'un mode guidé à faibles pertes radiatives.

Selon un mode de réalisation, la hauteur moyenne *L* entre la micro-planche et le réflecteur associé est inférieure ou égale à $\dfrac{\lambda}{4 \times n}$, ce qui favorise le couplage entre le mode guidé par la texturation et la micro-planche en mettant par la mise en oeuvre d'un couplage du type évanescent entre le mode guidé et la micro-planche.

Selon un mode de réalisation, la partie du réflecteur positionnée sous la micro-planche est non texturée, ce qui évite l'absorption du rayonnement par la partie du réflecteur située sous la micro-planche.

**BREVE DESCRIPTION DES FIGURES**

La présente invention sera mieux comprise à la lecture de la description qui va suivre, donnée uniquement à titre d'exemple, et réalisée en relation avec les dessins annexés, dans lesquels des références identiques désignent des éléments identiques ou analogues, et dans lesquels :

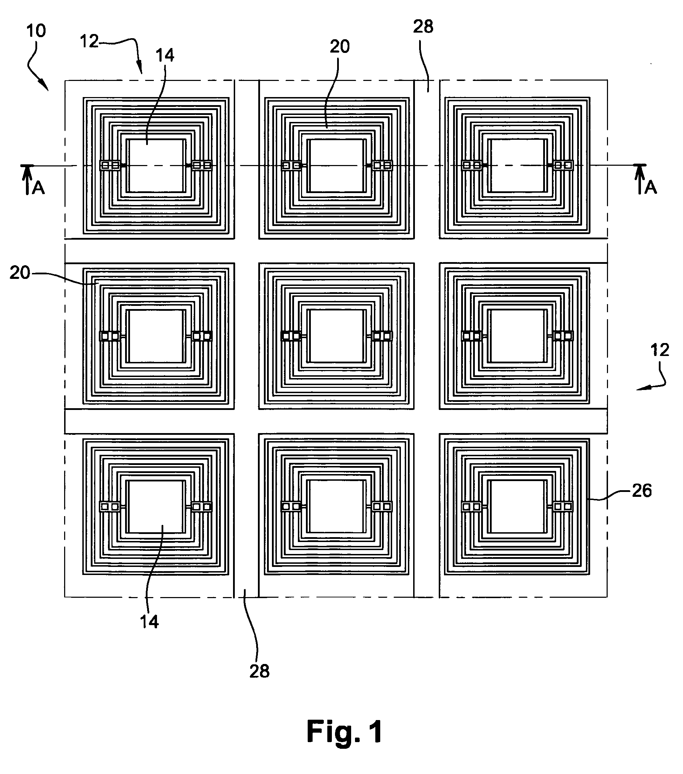

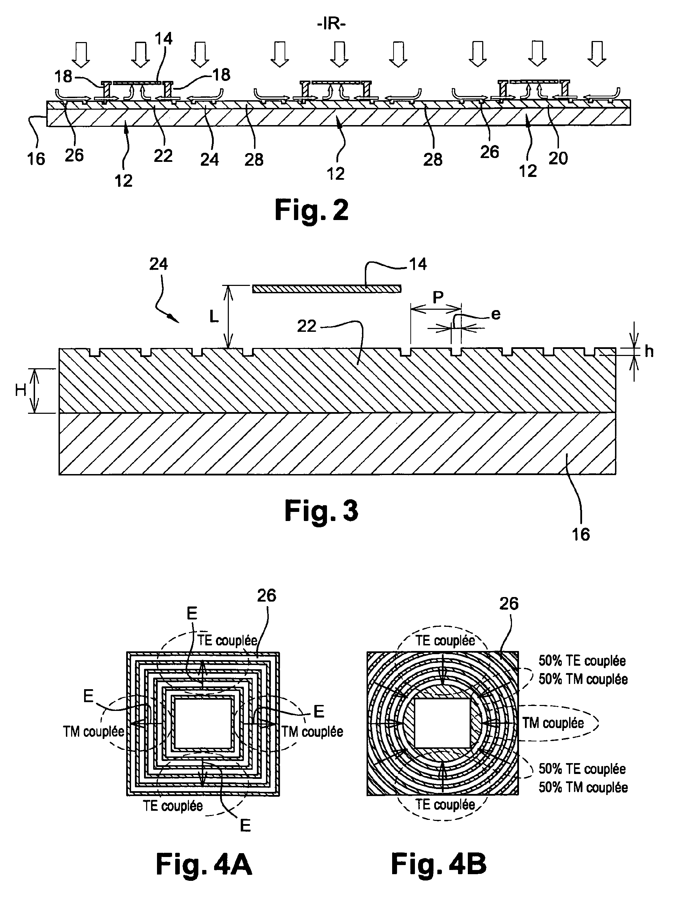

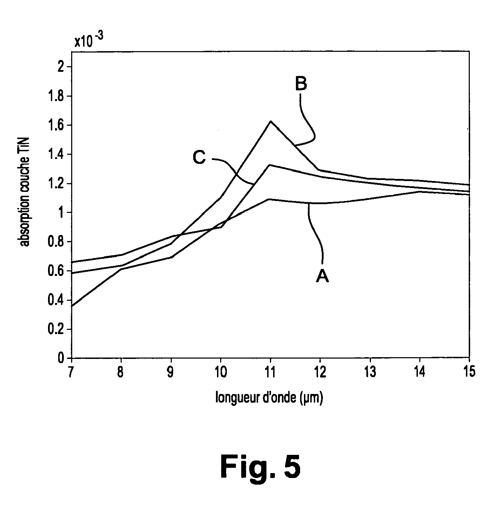

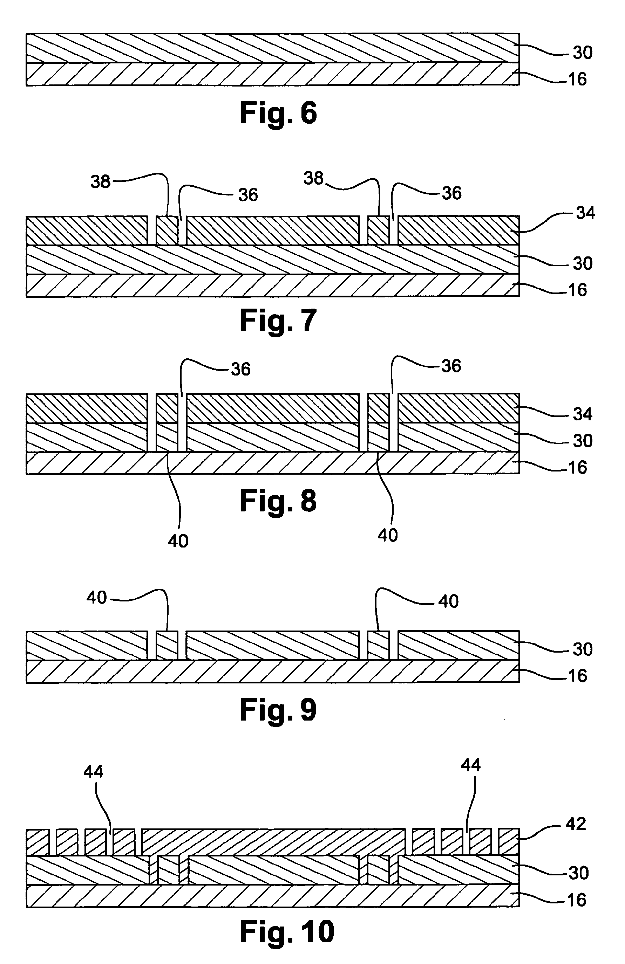

■ la figure 1 est une vue schématique de dessus d'une matrice de trois pixels bolométriques par trois pixels bolométriques selon l'invention ;
■ la figure 2 est une vue schématique en section de la matrice de la figure 1 selon l'axe A-A ;
■ la figure 3 est une vue schématique simplifié en section d'un pixel de la matrice de la figure 1 ;
■ les figures 4A et 4B sont respectivement des vues schématiques de pixels avec des motifs périodiques périphériques en forme de carrées et de cercles concentriques ;
■ la figure 5 est un tracé de courbe d'absorption de deux détecteurs selon l'invention et d'un détecteur selon l'état antérieur de la technique ; et
■ les figures 6 à 15 sont des vues schématiques en section illustrant un exemple de réalisation d'un détecteur selon l'invention.

**DESCRIPTION DETAILLEE DE L'INVENTION**

En se référant aux figures 1 et 2, il est illustré à titre d'exemple une matrice de détection bolométrique **10** de trois pixels par trois pixels.

Chaque pixel **12** comporte une micro-planche bolométrique **14**, suspendue au-dessus d'un substrat **16** par des bras de soutien et d'isolation thermique **18b,** et permettant la détection d'un rayonnement électromagnétique incident « IR » dans une gamme de longueurs d'onde infrarouge comprises entre 0,75 μm et 1000 μm.

Comme cela est connu en soi, la micro-planche **14** s'échauffe sous l'action du rayonnement incident IR et voit sa résistance électrique varier en fonction de son échauffement. Un même matériau peut être utilisé pour mettre en oeuvre ces deux fonctions, comme du TiN par exemple qui est adapté à la détection des longueurs d'onde dans l'infrarouge moyen.

Les bras de soutien et d'isolation thermique **18** sont quant à eux constitués majoritairement d'un matériau peu conducteur de la chaleur mais comportent un élément conducteur électrique permettant de soumettre la micro-planche **14** à une tension et/ou un courant de polarisation pour la mesure de sa résistance électrique. Les bras **18** sont électriquement connectés à un circuit de lecture agencé dans le substrat **16** qui pilote la polarisation de la micro-planche **14**.

Dans le cadre de l'invention, la structure et le fonctionnement des micro-planches bolométriques **14** importent peu, n'importe quel type de micro-planche pouvant être envisagé, comme par exemple celui décrit dans le document FR 2 752 299. On retiendra seulement que l'invention s'applique à toute matrice bolométrique dont la surface des micro-planches est réduite vis-à-vis de la surface des pixels.

Chaque pixel **12** comporte par ailleurs un réflecteur plan **20** formé à partir d'une couche de métal déposée sur le substrat **16**. Le réflecteur **20** comporte une première partie **22** disposée sous la micro-planche **14** et une seconde partie **24** disposée autour de la micro-planche **14**. Dans ce qui suit, la partie **22** est nommée « partie centrale » du réflecteur et la partie **24** est nommée « partie périphérique » du réflecteur.

La partie centrale **22** du réflecteur est de préférence pleine, c'est-à-dire sans texturation, et a pour première fonction de réfléchir la portion de rayonnement ayant traversé ladite micro-planche sans être absorbée, permettant ainsi au moins un double passage du rayonnement dans la micro-planche, voire un phénomène de résonnance lorsque la distance entre la micro-planche **14** et la partie centrale **22** est réglée par exemple de manière à former une lame quart d'onde.

La partie périphérique **24** du réflecteur **20** comporte quant à elle une texturation de sa surface selon un motif périodique, par exemple des fentes parallèles **26** de section rectangulaire gravées dans l'épaisseur du réflecteur **20** et formant des carrés concentriques.

Comme illustré par les flèches à la figure 2, le motif périodique est conçu pour coupler le rayonnement incident sur la partie périphérique **24** à une onde guidée, également connu sous le nom d'onde « plasmon ». L'onde guidée se propage alors vers partie centrale **22** du réflecteur **20**, qui renvoie celle-ci vers la micro-planche **14** par un couplage évanescent pour son absorption.

Le motif périodique entourant la micro-planche **14** augmente ainsi « virtuellement » la surface utile dédiée à la détection du rayonnement, et donc la sensibilité du détecteur, sans pour autant que la micro-planche **14** ne soit elle-même modifiée.

En se référant à la vue en section simplifiée de la figure 3, le motif périodique de la partie périphérique **24** a une période $P$ inférieure ou égale $\dfrac{\lambda}{n}$, où λ est une longueur d'onde de la gamme de longueurs d'onde à détecter, et $n$ est l'indice de réfraction du milieu séparant la micro-planche **14** du réflecteur **20**, usuellement de l'air. Ceci permet d'exciter un mode plasmon de surface ayant la longueur d'onde λ. Pour des périodes $P$ supérieures, il apparait un phénomène de diffraction qui nuit à la qualité du couplage de l'onde, jusqu'à une disparition du couplage à mesure que la période augmente $P$.

Avantageusement, la période $P$ est sensiblement égale à $\dfrac{\lambda}{3 \times n}$. Les inventeurs ont en effet observé que le couplage est optimal à cette valeur de la période $P$.

Avantageusement, la micro-planche **14** se situe à une distance $L$ de la partie centrale **22** inférieure ou égale à $\dfrac{\lambda}{4 \times n}$. Il est ainsi obtenu un couplage entre le mode guidé couplé par la partie périphérique **24** du réflecteur et la micro-planche absorbante **14**, et plus particulièrement un couplage évanescent qui permet un « renvoi » efficace de l'énergie récupérée par le couplage mis en oeuvre par la partie périphérique **24** vers la micro-planche **14**.

Avantageusement, la partie en creux de la texturation représente moins de 50% de la surface totale de la texturation. Concernant les fentes **26**, ceci signifie que leur largeur $e$ est choisie telle que $\dfrac{e}{P} < 0,5$. De cette manière, l'excitation de l'onde guidée est réalisée sans perte radiative significative. Par ailleurs, la largeur $e$ est avantageusement choisie telle que $\dfrac{e}{P} > 0,05$. En deçà d'une telle valeur, le couplage est en effet très faible, et donc peu intéressant, puisque le réflecteur se comporte comme un film métallique quasi-continu.

Avantageusement, la profondeur h de la texturation est inférieure ou égale à $\dfrac{\lambda}{5 \times n}$, et préférentiellement sensiblement égale à $\dfrac{\lambda}{10 \times n}$. La profondeur réduite des parties en creux du motif périodique évitent donc que le rayonnement ne reste piégé dans ces parties et par conséquent absorbé par le matériau dans lequel elles sont formées.

Avantageusement, une épaisseur pleine $H$ du réflecteur **20**, supérieure à l'épaisseur de peau du matériau métallique du réflecteur **20** à la longueur d'onde λ, est présente sous la texturation de manière à rendre la partie périphérique **24** opaque au rayonnement et ainsi éviter une transmission de celui-ci vers le substrat **16**.

Dans l'exemple de réalisation venant d'être décrit, le motif périodique est constitué de fentes **26** formant des carrés concentriques. De cette manière, le couplage réalisé par la partie périphérique **24** n'est pas sensible à la polarisation du rayonnement incident. En se référant à la figure 4A, les portions des fentes **26** formant deux côtés opposés des carrés sont sensibles à une polarisation, par exemple la polarisation TE, et les portions des fentes **26** formant les deux autres côtés opposées des carrés sont sensibles à la polarisation perpendiculaire, dans l'exemple la polarisation TM. Cet agencement permet de coupler 50% de la polarisation TE et 50% de la polarisation TM.

D'autres formes de motifs sont cependant possibles. Par exemple, pour insensibiliser le couplage à la polarisation du rayonnement incident, les fentes **26** sont circulaires et concentriques, comme illustré à la figure 4B. Notamment, l'absence de coin permet une fabrication plus facile par lithogravure que des carrées.

En variante encore, certaines applications peuvent nécessiter la détection d'un seul type de polarisation, auquel cas le motif périodique de la partie périphérique **24** est composé de fentes parallèles agencées selon un axe unique.

De manière avantageuse, les parties périphériques **24** de deux pixels adjacents sont séparées par une région qui induit une rupture de la périodicité des motifs de la texturation. Par exemple dans le cas des fentes carrées **26**, la région de rupture de périodicité est une partie pleine **28**, dont la largeur est supérieure en relatif d'au moins 5% à la largeur des parties pleines des parties périphériques **24**, ou une fente, dont la largeur est supérieure en relatif d'au moins 5% à la largeur des fentes des parties périphériques **24**.

Grâce à une telle région de rupture, le rayonnement incident sur une partie périphérique **24** d'un réflecteur ne peut se propager que vers la partie centrale **22** de ce réflecteur, évitant ainsi le phénomène de « cross-talk » par couplage. Les réflecteurs **20** sont ainsi individualisés de manière efficace.

Il a été décrit un exemple de réalisation dans lequel la partie centrale **22** est pleine. En variante, la partie centrale est texturée de la même manière que la partie périphérique **24**, la texturation recouvrant donc la totalité de la surface du substrat dédiée à un pixel.

La figure 5 illustre le gain d'absorption apporté par la partie périphérique texturée du réflecteur selon l'invention. Plus particulièrement, l'absorption a été mesurée en fonction de la longueur d'onde du rayonnement incident pour différents agencements de détecteur comprenant des micro-planches carrées en TiN de 12 μm de côté pour une surface carrée des pixels de 25 μm de côté. Le détecteur est réglé pour une longueur d'onde de 11 μm.

Le premier agencement de détecteur correspond à celui de l'état antérieur de la technique. Chaque micro-planche est disposée au dessus d'un réflecteur métallique plein à une distance de 2,5 μm de celui-ci. Le réflecteur ne comprend pas de partie périphérique texturée. L'absorption de ce premier agencement est illustrée par la courbe « A ».

Le deuxième agencement de détecteur correspond à l'agencement décrit en relation avec les figures 1 à 3. Chaque micro-planche **14** est disposée à 2,5 μm du réflecteur **20**. La partie périphérique **24** du réflecteur **20** recouvre toute la surface du substrat **16** dédiée au pixel **12**, hormis la partie centrale **22**, et les fentes **26** ont une périodicité $\underline{P}$ égale à 3,4 μm, une largeur $\underline{e}$ égale à 0,6 μm et une épaisseur $\underline{h}$ égale à 0,7 μm. L'absorption de ce deuxième agencement est illustrée par la courbe « B ».

Le troisième agencement de détecteur diffère du deuxième agencement en ce que la texturation recouvre toute la surface du substrat **16** dédiée au pixel **12**, y compris la partie centrale **22** du réflecteur **20**. Les fentes **26** présentent la même géométrie que celle du deuxième agencement, et l'absorption du troisième agencement est illustré par la courbe « C ».

Comme il est possible de le constater sur la figure 5, un gain d'absorption très important est obtenu grâce à l'invention, ce gain étant supérieur à 50% pour le deuxième agencement à λ = 11 μm par rapport à l'état de la technique.

Le gain d'absorption obtenu par le troisième agencement, bien que supérieur à 20% par rapport à l'état de la technique, est moins élevé que celui obtenu par le deuxième agencement. Une partie centrale **22** pleine est donc privilégiée.

Il va à présent être décrit en relation avec les figures 6 à 15 un procédé de fabrication d'un détecteur selon l'invention.

Le procédé débute par le dépôt d'une couche métallique **30** sur la totalité de la surface d'un substrat **16** au-dessus duquel la matrice de micro-planches suspendues **14** est destinée à être fabriquée (figure 6). La couche **30**, à partir de laquelle seront ultérieurement fabriqués les réflecteurs **20**, est par exemple une couche d'aluminium, de titane, de nitrure de titane, de cuivre ou de tungstène. Son épaisseur est égale à la somme des hauteurs $\underline{H}$ et $\underline{h}$ associées à la texturation des parties périphériques **24** des réflecteurs **20** (figure 3).

Le procédé se poursuit par la réalisation d'un masque lithographique. Ce masque est réalisé dans une couche de résine photosensible **34** au travers de laquelle des tranchées **36** délimitent des ilots **38** au dessus des emplacements prévus pour les bras de soutien et d'isolation thermique **18** des micro-planches **14** (figure 7).

Une gravure de la couche métallique **30** est alors réalisée, préférentiellement par voie sèche, au travers des tranchées **36** et jusqu'au substrat **16** afin de délimiter des plots métalliques **40** qui recevront ultérieurement les bras de soutien **18** (figure 8). Les plots **40** servent ainsi de plots de connexion pour les bras **18** et sont électriquement isolés du reste de la couche métallique **30** dans laquelle sont fabriqués les réflecteurs **20**.

La couche de résine **34** est retirée de manière classique, par exemple au moyen d'un décapage (ou « stripping »), par voie sèche ou humide (figure 9).

Le procédé se poursuit alors par la réalisation classique d'un masque lithographique dans une couche de résine photosensible **42** déposée sur la couche métallique **30** et au travers de laquelle sont réalisées des tranchées **44** correspondant à la texturation souhaitée pour les réflecteurs **20**, dans l'exemple illustré uniquement une texturation des parties périphériques **24** (figure 10). Bien entendu, si l'application l'impose, des tranchées peuvent être prévues dans le masque lithographique **42** au dessus de portions **46** de la couche métallique **30** destinées à devenir les parties centrales **22** des réflecteurs **20**.

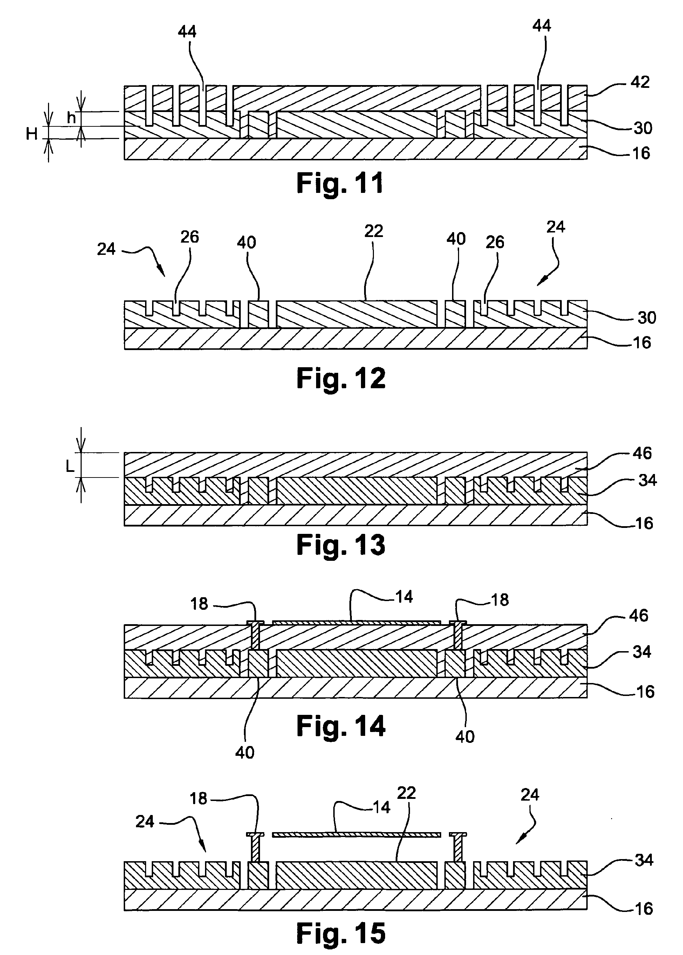

Une gravure partielle de la couche métallique **30** au travers des tranchées **44** du masque **42** est ensuite réalisée sur la profondeur $\underline{h}$ (figure 3) souhaitée pour la texturation des réflecteurs **20**, de manière à fabriquer ces derniers (figure 11). La gravure partielle est préférentiellement réalisée par voie sèche, par exemple au moyen d'une chimie chlorée, bromée ou fluorée, mais peut également être réalisée par voie humide, par exemple au moyen d'une chimie acide ou alcaline. La voie sèche est préférée dans la mesure où elle présente une vitesse de gravure plus linéaire que celle de la voie humide, ce qui permet donc d'obtenir une gravure plus facilement maîtrisée.

Le masque lithographique **42** est alors retiré, par exemple au moyen d'un décapage par voie humide ou sèche (figure 12), puis une couche sacrificielle **46** est déposée sur l'ensemble (figure 13), cette couche présentant une épaisseur égale à $\underline{L}$ (figure 3) au dessus de la couche métallique **30**.

Les micro-planches bolométriques **14** sont alors formées sur la couche sacrificielle **46** au dessus des parties centrales **22** et les bras de soutien et d'isolation thermique **18** sont réalisés au travers de la couche sacrificielle **46** et au dessus des plots **40**, d'une manière connue en soi (figure 14).

Le procédé se termine alors par le retrait de la couche sacrificielle **46** (figure 15).

Grâce à l'invention, il est ainsi obtenu :

■ une augmentation significative de la sensibilité d'un détecteur bolométrique à micro-planches suspendues en raison de l'augmentation de la surface de détection ;

■ la possibilité de réaliser une imagerie multispectrale. En effet, la structuration périodique couple préférentiellement une longueur d'onde, par exemple autour de λ =11μm dans le cas illustré en relation avec la figure 5. En modifiant la périodicité d'un pixel à un autre, il est donc réalisé une matrice de pixels où chaque pixel renforce une longueur d'onde spécifique ; et

■ la possibilité de renforcer une polarisation en particulier.

**Revendications**

**1.** Détecteur bolométrique matriciel pour la détection d'un rayonnement électromagnétique dans une gamme prédéterminée de longueurs d'onde infrarouges, comprenant :

■ un substrat (16);
■ une matrice de micro-planches bolométriques (14) pour la détection dudit rayonnement, suspendues au dessus du substrat (16) à l'aide de bras de soutien (18) ; et
■ des réflecteurs métalliques (20) formés sur le substrat (16) et sous les micro-planches (14), pour la réflexion de la portion dudit rayonnement ayant traversé lesdites micro-planches (14) sans être absorbée par celle-ci,

*caractérisé* **en ce que** pour chaque micro-planche (14) :

■ le réflecteur (20) comporte une partie (22) positionnée au droit de la micro-planche (14) prolongée par une partie (24) non positionnée sous la micro-planche (14) ; et
■ au moins la partie (24) du réflecteur (20) non positionnée sous la micro-planche (14) présente une texturation (26) de surface selon un motif périodique apte à coupler une portion dudit rayonnement incident sur ladite partie (24) à une onde guidée se propageant vers la partie (22) du réflecteur positionnée sous la micro-planche (14).

**2.** Détecteur bolométrique matriciel selon la revendication 1, *caractérisé* **en ce que** la texturation (26) est réalisée sur une épaisseur de métal au moins supérieure à l'épaisseur de peau du métal constitutif de la couche métallique du réflecteur pour la gamme de longueurs d'onde.

**3.** Détecteur bolométrique matriciel selon la revendication 1 ou 2, *caractérisé* **en ce que** la texturation (26) comporte des fentes définissant des contours fermés concentriques, notamment des fentes définissant des cercles ou des carrés concentriques.

**4.** Détecteur bolométrique matriciel selon la revendication 1 ou 2, *caractérisé* **en ce que** la texturation comporte des fentes périodiques parallèles selon une seule direction.

**5.** Détecteur bolométrique matriciel selon l'une quelconque des revendications précédentes, *caractérisé* **en ce que** les réflecteurs (20) sont formés dans une couche métallique (30) recouvrant le substrat (16) au moins sous toute la surface de la matrice de micro-planches (14), et **en ce que** les réflecteurs (20) sont individualisés au moyen de zones (28) de la couche métallique (30) définissant une rupture de la périodicité de la texturation (26) des réflecteurs (20).

**6.** Détecteur bolométrique matriciel selon l'une quelconque des revendications précédentes, *caractérisé* **en ce que** la période $P$ du motif périodique de la texturation (26) est inférieure à $\frac{\lambda}{n}$, où $\lambda$ est une longueur d'onde de la gamme de longueurs d'onde à détecter et $n$ est l'indice de réfraction du milieu séparant la micro-planche (14) du réflecteur (20), et préférentiellement sensiblement égale à $\frac{\lambda}{3\times n}$.

**7.** Détecteur bolométrique matriciel selon la revendication 6, *caractérisé* **en ce que** la profondeur $h$ de la texturation (26) est inférieure ou égale à $\frac{\lambda}{5\times n}$, et préférentiellement sensiblement égale à $\frac{\lambda}{10\times n}$.

**8.** Détecteur bolométrique matriciel selon la revendication 6 ou 7, *caractérisé* **en ce que** la partie en creux de la texturation (26) représente moins de 50% de la surface totale de la texturation.

**9.** Détecteur bolométrique matriciel selon la revendication 8, *caractérisé* **en ce que** la texturation (26) est constituée de fentes périodiques, dont la largeur $e$ est choisie telle que $0,05 < \frac{e}{P} < 0,5$, où $P$ est la période du motif de la texturation.

**10.** Détecteur bolométrique matriciel selon l'une quelconque des revendications 6 à 9, *caractérisé* **en ce que** la hauteur moyenne $L$ entre la micro-planche (14) et le réflecteur (20) est inférieure ou égale à $\frac{\lambda}{4\times n}$.

**11.** Détecteur bolométrique matriciel selon l'une quelconque des revendications précédentes, *caractérisé* **en ce que** la partie (22) du réflecteur (20) positionnée sous la micro-planche (14) est non texturée.

## Claims

1. A bolometric array detector for detecting electromagnetic radiation in a predetermined range of infrared wavelengths comprising:

   ■ a substrate (16);
   ■ an array of bolometric micro-plates (14) for detecting said radiation that are suspended above the substrate (16) by support arms (18); and
   ■ metallic reflectors (20) formed on the substrate (16) and underneath micro-plates (14) in order to reflect that portion of said radiation which has passed through said micro-plates (14) without being absorbed by the latter.

   **characterized** in that, for each micro-plate (14):

   ■ reflector (20) comprises one part (22) located directly below the micro-plate (14) which extends as a part (24) which is not positioned underneath micro-plate (14); and
   ■ at least the part (24) of reflector (20) which is not positioned underneath the micro-plate (14) has surface texturing in a repeating pattern capable of coupling a portion of said incident radiation on said part (24) to a guided wave that propagates towards part (22) of the reflector positioned underneath micro-plate (14).

2. The bolometric array detector as claimed in claim 1, **characterized** in that texturing (26) is produced over a thickness of metal that is at least greater than the skin depth of the metal from which the metal layer of the reflector is made for the wavelength range in question.

3. The bolometric array detector as claimed in claim 1 or 2, **characterized** in that texturing (26) comprises slits that define closed concentric contours, especially slits defining concentric circles or squares.

4. The bolometric array detector as claimed in claim 1 or 2 , **characterized** in that the texturing comprises periodic parallel slits in a single direction.

5. The bolometric array detector as claimed in any of the above claims, **characterized** in that reflectors (20) are formed in a metal layer (30) that covers substrate (16) at least underneath the entire surface area of the array of micro-plates (14) and **in that** reflectors (20) are individualized by means of areas (28) of metal layer (30) that define a break in the periodicity of the texturing (26) of reflectors (20).

6. The bolometric array detector as claimed in any of the above claims, **characterized** in that the period P of the repeating pattern of texturing (26) is less than $\dfrac{\lambda}{n}$ where λ is a wavelength in the range of wavelengths that is to be detected and n is the refraction index of the medium that separates microplate (14) from reflector (20) and is preferably substantially equal to $\dfrac{\lambda}{3 \times n}$.

7. The bolometric array detector as claimed in claim 6, **characterized** in that the depth $h$ of texturing (26) is equal to or less than $\dfrac{\lambda}{5 \times n}$ and preferably substantially equal to $\dfrac{\lambda}{10 \times n}$.

8. The bolometric array detector as claimed in claim 6 or 7, **characterized** in that the recessed portion of texturing (26) represents less than 50% of the total surface area of the texturing.

9. The bolometric array detector as claimed in claim 8, **characterized** in that texturing (26) consists of periodic slits having a width e which is selected so that $0.05 < \dfrac{e}{P} < 0.5$ where P is the period of the texturing pattern.

10. The bolometric array detector as claimed in any of claims 6 to 9, **characterized** in that the average height $L$ between micro-plate (14) and reflector (20) is equal to or less than $\dfrac{\lambda}{4 \times n}$ .

11. The bolometric array detector as claimed in any of the above claims, **characterized** in that part (22) of reflector (20) located underneath micro-plate (14) is not textured.

## Patentansprüche

1. Bolometrischer Matrixdetektor zur Erfassung einer elektromagnetischen Strahlung in einem vorbestimmten Infrarotwellenlängenbereich, Folgendes umfassend:

   ■ ein Substrat (16);
   ■ eine Matrix aus bolometrischen Mikroplatten (14) zur Erfassung der Strahlung, die über dem Substrat (16) mit Hilfe von Haltearmen (18) aufgehängt sind; und

■ Metallreflektoren (20), die auf dem Substrat (16) und unter den Mikroplatten (14) zur Reflexion des Teils dieser Strahlung ausgebildet sind, der durch die Mikroplatten (14) hindurchgegangen ist, ohne von diesen absorbiert worden zu sein,

**dadurch gekennzeichnet, dass** bei jeder Mikroplatte (14):

■ der Reflektor (20) einen an der Stelle der Mikroplatte (14) angeordneten Abschnitt (22) umfasst, der sich in einem nicht unter der Mikroplatte (14) angeordneten Abschnitt (24) fortsetzt:

■ zumindest der nicht unter der Mikroplatte (14) positionierte Abschnitt (24) des Reflektors (20) eine einem sich in regelmäßigem Abstand wiederholendem Muster entsprechende Oberflächentexturierung (26) aufweist, die einen Teil der auf den Abschnitt (24) einfallenden Strahlung in eine geleitete Welle einkoppeln kann, die sich zu dem unter der Mikroplatte (14) angeordneten Abschnitt (22) des Reflektors weiterbewegt.

2. Bolometrischer Matrixdetektor nach Anspruch 1, **dadurch gekennzeichnet, dass** die Texturierung (26) auf einer Metalldicke hergestellt ist, die zumindest größer als die Hautdicke des Metalls ist, das die Metallschicht des Reflektors für den Wellenlängenbereich bildet.

3. Bolometrischer Matrixdetektor nach Anspruch 1 oder 2, **dadurch gekennzeichnet, dass** die Texturierung (26) Schlitze umfasst, die geschlossene konzentrische Konturen bilden, insbesondere Schlitze, die konzentrische Kreise oder Quadrate bilden.

4. Bolometrischer Matrixdetektor nach Anspruch 1 oder 2, **dadurch gekennzeichnet, dass** die Texturierung sich in regelmäßigem Abstand wiederholende Schlitze bildet, die in einer einzigen Richtung parallel sind.

5. Bolometrischer Matrixdetektor nach einem der vorhergehenden Ansprüche, **dadurch gekennzeichnet, dass** die Reflektoren (20) in einer Metallschicht (30) ausgebildet sind, die das Substrat (16) zumindest unter der gesamten Fläche der Matrix aus Mikroplatten (14) bedeckt, und dass die Reflektoren (20) mittels Zonen (28) der Metallschicht (30) vereinzelt sind, wodurch eine Unterbrechung der regelmäßigen Wiederholung der Texturierung (26) der Reflektoren (20) gebildet ist.

6. Bolometrischer Matrixdetektor nach einem der vorhergehenden Ansprüche, **dadurch gekennzeichnet, dass** die Periode P des sich in regelmäßigem Abstand wiederholenden Musters der Texturierung (26) kleiner als $\dfrac{\lambda}{n}$ ist, worin $\lambda$ eine Wellenlänge des zu erfassenden n Wellenlängenbereichs ist, und n der Brechungsindex des die Mikroplatte (14) vom Reflektor (20) trennenden Mediums ist, und vorzugsweise gleich $\dfrac{\lambda}{3\,x\,n}$ ist.

7. Bolometrischer Matrixdetektor nach Anspruch 6, **dadurch gekennzeichnet, dass** die Tiefe h der Texturierung (26) kleiner oder gleich $\dfrac{\lambda}{5\,x\,n}$ und vorzugsweise im Wesentlichen gleich $\dfrac{\lambda}{10\,x\,n}$ ist.

8. Bolometrischer Matrixdetektor nach Anspruch 6 oder 7, **dadurch gekennzeichnet, dass** der vertiefte Teil der Texturierung (26) mindestens 50% der Gesamtoberfläche der Texturierung darstellt.

9. Bolometrischer Matrixdetektor nach Anspruch 8, **dadurch gekennzeichnet, dass** die Texturierung (26) aus sich in regelmäßigem Abstand wiederholenden Schlitzen besteht, deren Breite e so gewählt ist, dass $0,05 < \dfrac{e}{P} < 0,5$ gilt, worin P die Periode des Musters der Texturierung ist.

10. Bolometrischer Matrixdetektor nach einem der Ansprüche 6 bis 9, **dadurch gekennzeichnet, dass** die mittlere Höhe L zwischen der Mikroplatte (14) und dem Reflektor (20) kleiner oder gleich $\dfrac{\lambda}{4\,x\,n}$ ist.

11. Bolometrischer Matrixdetektor nach einem der vorhergehenden Ansprüche, **dadurch gekennzeichnet, dass** der unter der Mikroplatte (14) angeordnete Abschnitt (22) des Reflektors (20) nicht texturiert ist.

**Fig. 1**

**Fig. 2**

**Fig. 3**

**Fig. 4A**

**Fig. 4B**

**Fig. 5**

**Fig. 6**

**Fig. 7**

**Fig. 8**

**Fig. 9**

**Fig. 10**

**Fig. 11**

**Fig. 12**

**Fig. 13**

**Fig. 14**

**Fig. 15**

14

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2752299
- WO 2008018082 A
- US 2008185521 A